# FASCICULE DE BREVET EUROPEEN

(11) **EP 2 389 845 B1**
(45) Date de publication et mention de la délivrance du brevet: **04.11.2015**
(21) Numéro de dépôt: 11167942.9
(22) Date de dépôt: 27.05.2011
(51) Int. Cl.: A47D 13/02, A47D 15/00

(54) **Nacelle pour enfant**
Wanne für ein Kind
Cradle for a child

(30) Priorité: 28.05.2010 FR 1002256
(43) Date de publication de la demande: 30.11.2011
(73) Titulaire: Dorel France SA, 49309 Cholet Cedex (FR)
(72) Inventeur: Godard, Christian, 85110 SAINTE CECILE (FR)
(74) Mandataire: Vidon Brevets & Stratégie

(56) Documents cités:
- EP-A1- 2 163 424
- EP-A2- 1 033 280
- WO-A1-2011/031162
- GB-A- 2 282 321
- JP-A- 2001 158 262
- US-A- 4 891 454
- US-A1- 2005 179 289

## Description

Le domaine de l'invention est celui de la puériculture. Plus précisément, l'invention concerne les nacelles pour enfant destinées à recevoir un enfant en bas âge en position allongée.

On connaît dans l'art antérieur des nacelles, communément appelées groupe 0, destinées à être placées dans des véhicules automobiles et permettant le transport d'un enfant de la naissance à 10 kg. Voir le document US-A-4 891 454, Figure 3.

Ces nacelles permettent de transporter, dans un véhicule automobile, l'enfant en position allongée, confortable, afin de préserver la qualité de son sommeil. La nacelle est alors fixée au véhicule automobile par des moyens de fixation classiques (ceintures de sécurité, pinces Isofix®, ...).

A la maison, la nacelle peut également être utilisée comme lit d'appoint.

Ainsi, sans réveiller l'enfant, la nacelle peut être transportée de la maison dans la voiture, et vice versa, de manière sûre et confortable.

Lorsque la nacelle est placée en voiture, un dispositif de retenue de l'enfant dans la nacelle doit être utilisé afin de garantir sa sécurité.

Cependant, lorsque la nacelle est utilisée comme lit d'appoint à la maison, ce dispositif de retenue n'est plus nécessaire. Il peut même s'avérer gênant ou blessant pour l'enfant, voire dangereux à cause de la longueur libre des sangles du dispositif de retenue.

L'invention a notamment pour objectif de pallier les inconvénients de l'art antérieur.

Plus précisément, un objectif de l'invention est de permettre d'utiliser une nacelle en voiture ou à la maison tout en ayant pour ces deux configurations un confort et une sécurité optimums.

Ces objectifs ainsi que d'autres qui apparaîtront par la suite sont atteints à l'aide d'une nacelle pour enfant comprenant une coque, présentant un fond sur lequel un enfant peut reposer, et à partir duquel s'étendent sensiblement verticalement des parois latérales, et un dispositif de retenue de l'enfant, ladite nacelle pouvant avoir une configuration dite de sommeil , la nacelle servant de lit, l'enfant étant allongé dans la nacelle sans que le dispositif de retenue de l'enfant ne soit utilisé, et une configuration dite de transport, la nacelle étant placée, par exemple, dans un véhicule automobile, le dispositif de retenue étant utilisé pour retenir l'enfant allongé dans la nacelle. Ladite nacelle présente, sur au moins une de ses parois latérales, côté interne, ou intérieur, de la nacelle, au moins un moyen rendant inaccessible le dispositif de retenue, ou une partie de celui-ci, audit enfant, dans la configuration de sommeil.

Par moyen rendant inaccessible le dispositif de retenue, ou une partie de celui-ci, à l'enfant, dans la configuration de sommeil, il faut comprendre un moyen permettant de soustraire le dispositif de retenue à toute manipulation de la part de l'enfant allongé dans la nacelle, l'enfant pouvant, éventuellement, encore être en contact ou toucher le dispositif de retenue, ou une partie de celui-ci, mais ne pouvant en aucun cas le manipuler. Ce moyen pourrait également être qualifié d'occultant. L'invention vise à apporter un maximum de sécurité à l'enfant, y compris en configuration de sommeil. Une fois placé dans ce moyen occultant, le dispositif de retenue ne pourra être manipulé que par un adulte, par exemple quand la nacelle est placée dans un véhicule automobile et que le dispositif de retenue doit de nouveau être utilisé.

La présence d'au moins un moyen rendant inaccessible le dispositif de retenue, ou une partie de celui-ci, audit enfant, dans la configuration de sommeil, permet de placer le dispositif de retenue, ou une partie de celui-ci, en dehors du périmètre, ou volume de sécurité, de l'enfant. En effet, la présence d'un dispositif de retenue est obligatoire pour pouvoir utiliser la nacelle dans un véhicule automobile, mais lorsque la nacelle sert de lit d'appoint l'enfant n'a plus à être retenu, il est même plus à l'aise pour dormir sans dispositif de retenue. Un dispositif de retenue, tel que, par exemple, un harnais 3 points constitué de deux sangles et d'une patte d'entrejambe reliés au niveau d'une boucle, lorsqu'il n'est pas utilisé peut entraîner une gêne voire blesser l'enfant endormi. Le fait d'avoir des moyens rendant inaccessible le dispositif de retenue, ou une partie de celui-ci, audit enfant, dans la configuration de sommeil, permet de soustraire les sangles de l'espace occupé par l'enfant. La patte d'entrejambe peut optionnellement être également rangée.

Ledit au moins un moyen rendant inaccessible le dispositif de retenue, ou une partie de celui-ci, audit enfant, dans la configuration de sommeil, est situé au niveau d'au moins une paroi latérale de la nacelle.

Ainsi, le dispositif de retenue reste facilement accessible à un adulte tout en éloignant au maximum le dispositif de l'enfant allongé dans la nacelle. Cet emplacement du au moins un moyen rendant inaccessible le dispositif de retenue, ou une partie de celui-ci, audit enfant, dans la configuration de sommeil, permet d'accéder au dispositif de retenue sans avoir à bouger l'enfant qui peut alors dormir tranquillement.

Dans un mode de réalisation particulier de l'invention, ledit au moins un moyen rendant inaccessible le dispositif de retenue, ou une partie de celui-ci, audit enfant, dans la configuration de sommeil, est un passant. On peut envisager un passant de largeur peu importante ou, au contraire, un passant présentant une largeur suffisante pour masquer une grande partie du dispositif de retenue.

Ce mode de réalisation est facile et peu coûteux à réaliser et permet d'occulter le dispositif de retenue tout en le laissant opérationnel (le dispositif de retenue étant prêt à être utilisé).

Dans un autre mode de réalisation de l'invention, ledit au moins un moyen rendant inaccessible le dispositif de retenue, ou une partie de celui-ci, audit enfant, dans la configuration de sommeil, comprend un rabat dont au moins une partie présente une surface destinée à être liée, de manière amovible, à la nacelle, le dispositif de retenue, ou une partie de celui-ci, pouvant être placé dans ce rabat.

Dans ce mode de réalisation, il suffit de libérer la partie de rabat présentant une surface, par exemple auto-agrippante, de placer le dispositif de retenue, ou une partie de celui-ci, contre la paroi de la nacelle puis de remettre le rabat par-dessus le dispositif de retenue, le rabat venant en prise avec la nacelle.

Ce mode de réalisation permet d'occulter toute présence du dispositif de retenue, ou d'une partie de celui-ci, au niveau des parois latérales de la nacelle. Ainsi, même si l'enfant bouge et se retrouve contre l'une des parois latérales de la nacelle, il ne sera pas en contact direct avec la sangle de harnais mais avec un rabat pouvant être un tissu.

Dans un autre mode de réalisation de l'invention, ladite nacelle présente une confection et ledit au moins un moyen rendant inaccessible le dispositif de retenue, ou une partie de celui-ci, audit enfant, dans la configuration de sommeil, est une fente formée dans la confection de la nacelle.

Ce mode de réalisation permet d'occulter très facilement le dispositif de retenue, ou une partie de celui-ci, et entraîne une diminution importante de la gêne de l'enfant.

Dans un mode de réalisation de l'invention avantageux, la fente formée dans la confection de la nacelle présente une forme rectiligne terminée à une extrémité par une ouverture plus large.

L'ouverture plus large permet d'ouvrir la fente pour y insérer facilement le dispositif de retenue et l'occulter, mais également d'avoir accès facilement au dispositif de retenue inséré et de le retirer de la fente. De même, ce mode de réalisation permet de diminuer grandement la gêne de l'enfant et présente, en outre, un aspect esthétique.

Le dispositif de retenue peut être un harnais, présentant deux sangles et une patte d'entrejambe destinées à être réunies au niveau d'une boucle. Le moyen rendant inaccessible le dispositif de retenue, ou une partie de celui-ci, audit enfant, dans la configuration de sommeil, selon l'invention, peut alors concerner les sangles seules, la patte d'entrejambe restant visible dans la nacelle, ou ledit moyen, selon l'invention, peut concerner l'ensemble des parties du harnais, ledit moyen étant l'un de ceux cités précédemment ou une combinaison de ceux-ci.

D'autres caractéristiques et avantages de l'invention apparaîtront plus clairement à la lecture de la description suivante de différents modes de réalisation, donnés à titre de simples exemples illustratifs et non limitatifs, et des dessins annexés, parmi lesquels :
la figure 1 illustre schématiquement une nacelle, destinée à recevoir un enfant en position allongée, selon un premier mode de réalisation de l'invention,
la figure 2 est une vue partielle, schématique, agrandie de la zone entourée d'un cercle de la figure 1, du premier mode de réalisation de l'invention (la nacelle ayant été placée en configuration de sommeil),
la figure 3 est une vue schématique d'un deuxième mode de réalisation de l'invention,
la figure 4 est une vue schématique d'un troisième mode de réalisation de l'invention,
la figure 5 est une vue schématique d'un quatrième mode de réalisation de l'invention,
la figure 6 est une vue schématique d'un cinquième mode de réalisation de l'invention,
la figure 7 illustre schématiquement une moitié de la nacelle selon le cinquième mode de réalisation,
les figures 8a, 8b, 8c illustrent schématiquement le fonctionnement du moyen rendant inaccessible le dispositif de retenue, ou une partie de celui-ci, audit enfant, dans la configuration de sommeil, selon le cinquième mode de réalisation.

L'invention concerne donc les nacelles présentant un moyen de retenue de l'enfant. Ces nacelles sont connues dans l'art antérieur et peuvent être utilisée pour transporter l'enfant, en position allongée, dans la voiture ou bien ces nacelles peuvent être utilisées comme lit d'appoint, à la maison, l'enfant étant allongé mais non maintenu par le dispositif de retenue.

L'inconvénient de ces nacelles de l'art antérieur est que lorsqu'elles sont utilisées comme lit d'appoint, le dispositif de retenue, non utilisé, gêne l'enfant et représente un risque d'étranglement par les sangles libres du dispositif de retenue. Toutefois, il est judicieux que ce dispositif de retenue reste en place dans la nacelle, et ne puisse donc pas être oublié ou mal repositionné, car son utilisation est obligatoire lorsque la nacelle est placée dans un véhicule automobile.

L'invention concerne donc un moyen rendant inaccessible le dispositif de retenue, ou une partie de celui-ci, audit enfant, dans la configuration de sommeil, qui permet à la fois de soustraire le dispositif de retenue de l'enfant lorsque la nacelle est utilisée en tant que lit d'appoint et qu'un adulte ait accès facilement au dispositif de retenue quand la nacelle est placée dans un véhicule automobile.

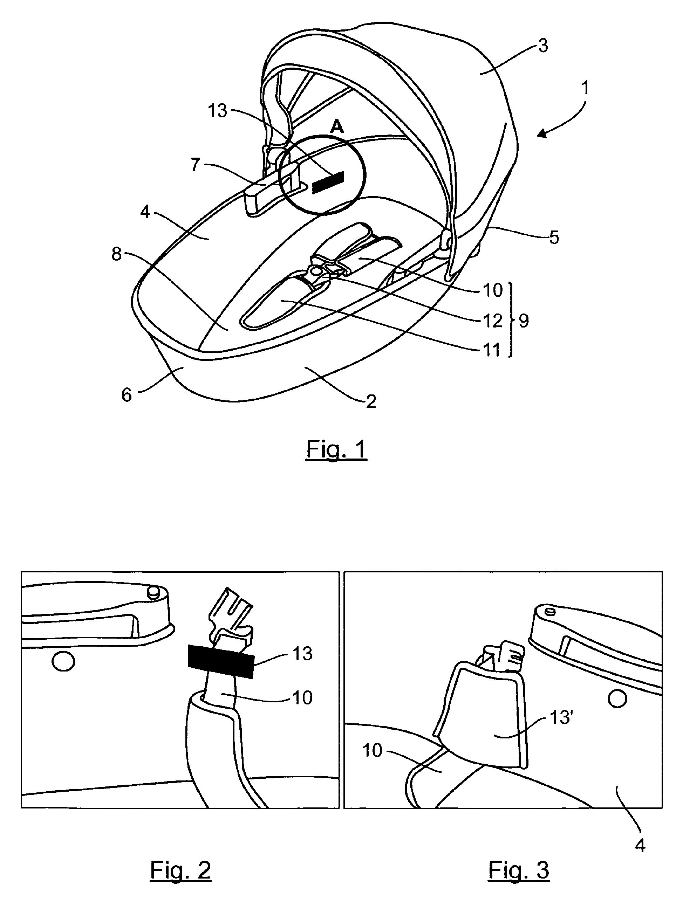

La figure 1 représente une nacelle 1, selon un mode de réalisation de l'invention, comprenant une coque 2 et une capote 3. Cette coque 2 présente deux parois latérales 4 et deux parois d'extrémité, la paroi d'extrémité 5, sur laquelle peut venir se fixer, de manière amovible, la capote, et la paroi d'extrémité 6 à l'opposé. La coque 2 comprend également des poignées 7, placées sur chaque paroi latérale 4. Ces poignées 7 permettent le transport de la nacelle. Dans le mode de réalisation particulier illustré, les poignées 7 se rétractent dans les parois latérales lorsqu'elles sont inutilisées.

Dans la coque 2 est placé un matelas 8 sur lequel sera placé l'enfant allongé dans la nacelle 1. L'enfant, allongé dans la nacelle 1, a sa tête dirigée vers la paroi d'extrémité 5 où la capote 3 le protège, par exemple du soleil, du vent, de la pluie...

Enfin, la coque 2 présente, dans cette illustration, un dispositif de retenue 9 qui est, ici, un harnais 3 points formé de deux sangles 10 (sur cette figure un fourreau classique, non décrit, entoure chaque sangle) et d'une patte d'entrejambe 11 reliées entre elles par une boucle 12. Ce harnais est un dispositif de retenue de l'enfant placé allongé dans la nacelle 1. Il est à noter qu'une ceinture ventrale, parfois appelée baudrier, peut être utilisée à la place du harnais 3 points.

Dans une nacelle, le volume intérieur recevant l'enfant est défini par un fond, recevant généralement un matelas, sur lequel l'enfant repose, allongé, et des parois sensiblement verticales, s'étendant depuis le fond.

La nacelle 1, selon l'invention, présente sur au moins une (et généralement sur deux) de ses parois latérales 4 (une seule étant visible sur la figure 1), côté interne, ou intérieur de la nacelle, un moyen rendant inaccessible le dispositif de retenue 9, ou une partie de celui-ci, à l'enfant, dans la configuration de sommeil, c'est-à-dire lorsque la nacelle n'est pas utilisée dans un véhicule.

Ledit moyen est, dans un premier mode de réalisation, un passant 13. Ce passant 13 est fixé, à ses extrémités à la paroi latérale 4. Toute méthode de fixation de ce passant 13 peut être envisagée, par exemple, si la nacelle présente une confection sur ses parois latérales, les extrémités du passant peuvent être cousues.

Dans la figure 1, l'enfant n'a pas été représenté mais la nacelle est en configuration de transport, les sangles et la patte d'entrejambe du harnais étant reliées au niveau de la boucle.

La figure 2 est un agrandissement du passant 13 de la figure 1, la nacelle étant, cette fois, en configuration de sommeil. Quand la nacelle 1 est utilisée comme lit d'appoint, c'est-à-dire quand l'enfant n'a pas besoin d'être retenu, une partie du dispositif de retenue 9, dans ce mode de réalisation les sangles 10 du harnais, sont passées chacune dans un des passants 13 présents sur chaque paroi latérale 4 de la coque 2 de la nacelle 1. Ainsi, les sangles 10 sont éloignées de l'enfant, allongé sur le matelas 8, elles ne l'entravent pas durant son sommeil et ne risquent pas de le blesser.

Dans un autre mode de réalisation de l'invention, illustré sur la figure 3, le passant 13' est beaucoup plus large. Ainsi, tout en gardant sa fonction d'éloignement des sangles 10, le passant 13' permet de cacher la sangle 10 du harnais et également d'offrir une surface moins agressive à l'enfant si celui-ci vient s'appuyer dessus. Par exemple, ce passant 13' peut être formé d'un tissu.

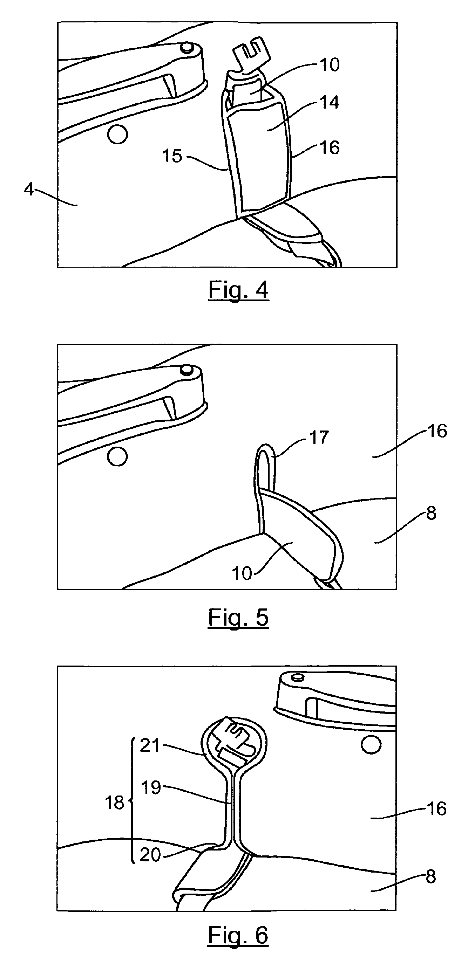

Dans un autre mode de réalisation de l'invention, illustré sur la figure 4, les parois latérales 4 de la coque 2 présentent un moyen rendant inaccessible le dispositif de retenue, ou une partie de celui-ci, audit enfant, dans la configuration de sommeil, qui a la forme d'un rabat 14. Ce rabat 14, de forme rectangulaire, présente deux bords longitudinaux 15 et 16. L'un de ces bords, par exemple le 15, est fixé à demeure à la paroi latérale 4 tandis que le deuxième bord longitudinal, par exemple le 16, présente une matière auto-agrippante lui permettant d'être fixé, de manière amovible, à la paroi latérale 4, côté intérieur de la nacelle, présentant une surface adaptée. Ainsi, lorsqu'on utilise la nacelle 1 en lit d'appoint et que l'on souhaite écarter les sangles 10 du périmètre de l'enfant, il suffit de séparer le bord longitudinal 16 du rabat 14 de la paroi latérale 4 et de placer la sangle 10 contre la paroi latérale 4. Ensuite, le rabat 14 est placé sur la sangle 10, le bord longitudinal 16 du rabat 14 revenant en prise avec la paroi latérale 4, maintenant ainsi la sangle 10 contre la paroi latérale 4 et masquant également cette sangle 10. La manipulation inverse est effectuée lorsqu'on souhaite attacher l'enfant avec le dispositif de retenue 9. Bien entendu, d'autres dispositifs qu'une matière auto-agrippante pourraient être utilisés tels qu'un système de clip ou une fente destinée à recevoir le bord longitudinal 16... De même, on peut envisager que les deux bords longitudinaux 15 et 16 soient amovibles.

Dans un autre mode de réalisation de l'invention, illustré sur la figure 5, la face intérieure des parois latérales 4 de la coque 2 présentent une confection 17 dans laquelle a été formée une fente 18 assurant le rôle de moyen rendant inaccessible le dispositif de retenue, ou une partie de celui-ci, audit enfant, dans la configuration de sommeil Cette fente 18 est perpendiculaire, par rapport au matelas 8 de la coque 2, mais bien sûr toute autre forme permettant d'assurer le même rôle est envisageable. La fente 18 permet d'insérer facilement les sangles 10 du harnais entre la confection 17 et la paroi latérale 4, quand la nacelle 1 est utilisée en lit, et de les retirer quand la nacelle 1 est placée dans un véhicule automobile.

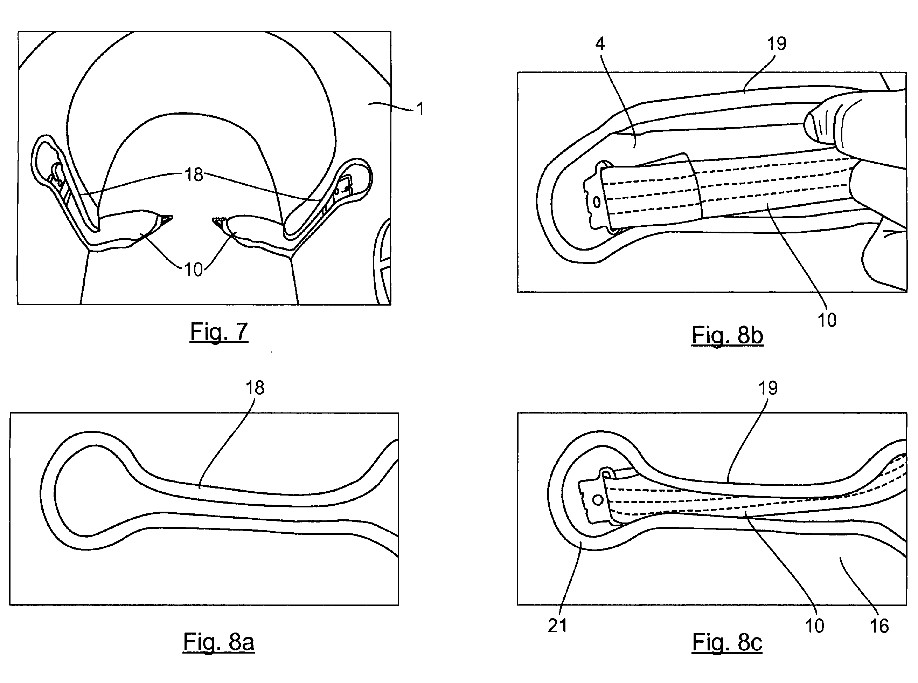

Dans encore un autre mode de réalisation de l'invention, illustré sur la figure 6, la face intérieure des parois latérales 4 de la coque 2 présentent la confection 17 et une fente 19, sensiblement perpendiculaire au matelas 8, formée dans cette confection 17. La fente 19 est particulière car elle comprend une partie rectiligne 20, dont une extrémité 21, dite inférieure, est proche du matelas 8 et dont l'autre extrémité 22, dite supérieure présente une ouverture plus large. La figure 7 illustre une moitié de nacelle 1, dans la configuration de sommeil, dont les sangles 10 du harnais ont été placées dans les moyens rendant inaccessible le dispositif de retenue, ou une partie de celui-ci, audit enfant, dans la configuration de sommeil. Lesdits moyens sont formés des fentes 19.

Le fonctionnement du moyen rendant inaccessible le dispositif de retenue, ou une partie de celui-ci, audit enfant, dans la configuration de sommeil des figures 6 et 7 est illustré aux figures 8a, 8b et 8c. Sur la figure 8a, la fente 19 est vide. En figure 8b, une sangle 10 de harnais est insérée dans la fente 19. Pour ce faire, les bords de la partie rectiligne 20 de la fente 19 sont écartés et la sangle 10 de harnais est placée contre la paroi latérale 4. Ensuite, figure 8c, les bords de la partie rectiligne 20 de la fente 19 sont rabattus sur la sangle 10 la maintenant ainsi éloignée de l'enfant et cachée par la confection 17. Le rabattement des bords de la partie rectiligne 20 peut se faire manuellement ou automatiquement (par exemple, grâce à la rigidité de la confection ou à la présence d'un ressort placé dans la confection au niveau des bords de la partie rectiligne 20 de la fente 19 ou de tout autre moyen envisagé par l'homme du métier). Si le dispositif de retenue 9, le harnais, doit être utilisé, il est aisé pour l'adulte d'avoir accès à la sangle 10 au niveau de l'extrémité supérieure 22, plus large, qui laisse apparaître une partie de la sangle 10 (idéalement cette ouverture plus large 22 se situe à une hauteur telle que la partie de sangle 10 visible se situe au-dessus du corps allongé de l'enfant ne le gênant donc pas). La sangle 10 peut être retirée de la fente 19 par l'adulte, par simple traction ou bien en écartant, de manière additionnelle, les bords de la partie rectiligne 20 pour faciliter la libération de la sangle 10.

L'invention n'est bien sûr pas limitée aux exemples qui viennent d'être décrits.

En particulier, lorsque la nacelle est utilisée en lit d'appoint et que le dispositif de retenue est un harnais 3 points, la patte d'entrejambe peut également être placée dans un moyen la rendant inaccessible à l'enfant, dans la configuration de sommeil, selon l'invention. Ce moyen peut, par exemple, être situé sur ou dans le matelas de la coque et être identique à ceux présents sur les parois latérales de la coque ou être différent.

## Revendications

1. Nacelle (1) pour enfant comprenant une coque (2), présentant un fond sur lequel un enfant peut reposer, et à partir duquel s'étendent sensiblement verticalement des parois latérales (4), et un dispositif de retenue de l'enfant (9), ladite nacelle (1) pouvant avoir une configuration dite de sommeil, l'enfant étant allongé dans la nacelle (1) sans que le dispositif de retenue (9) de l'enfant ne soit utilisé, et une configuration dite de transport, le dispositif de retenue (9) étant utilisé pour maintenir l'enfant allongé dans la nacelle (1), **caractérisée en ce que** ladite nacelle (1) présente, sur au moins une de ses parois latérales (4), côté interne de la nacelle, au moins un moyen (13,13',14,18,19) rendant inaccessible ledit dispositif de retenue (9), ou une partie de celui-ci, audit enfant, dans la configuration de sommeil.

2. Nacelle (1) selon la revendication 1, **caractérisée en ce que** ledit au moins un moyen rendant inaccessible ledit dispositif de retenue (9), ou une partie de celui-ci, audit enfant, dans la configuration de sommeil, est un passant (13, 13').

3. Nacelle (1) selon l'une quelconque des revendications précédentes, **caractérisée en ce que** ledit au moins un moyen rendant inaccessible ledit dispositif de retenue (9), ou une partie de celui-ci, audit enfant, dans la configuration de sommeil comprend un rabat (14) dont au moins une partie (16) présente une surface destinée à être liée, de manière amovible, à la nacelle (1), le dispositif de retenue (9), ou une partie de celui-ci, étant destiné à être placé dans ce rabat (14).

4. Nacelle (1) selon l'une quelconque des revendications précédentes, **caractérisée en ce que** ladite nacelle (1) présente une confection (17) et ledit au moins un moyen rendant inaccessible ledit dispositif de retenue (9), ou une partie de celui-ci, audit enfant, dans la configuration de sommeil, est une fente (18, 19) formée dans ladite confection (17).

5. Nacelle (1) selon la revendication 4, **caractérisée en ce que** ladite fente (19) présente une forme rectiligne (20) terminée à une extrémité par une ouverture plus large (22).

6. Nacelle (1) selon l'une quelconque des revendications précédentes, **caractérisée en ce que** ledit dispositif de retenue (9) est un harnais, présentant deux sangles (10) et une patté d'entrejambe (11) destinées à être réunies au niveau d'une boucle (12), ledit au moins un moyen rendant inaccessible ledit dispositif de retenue (9), ou une partie de celui-ci, audit enfant, dans la configuration de sommeil, étant destiné à recevoir lesdites sangles (10) ou lesdites sangles (10) et ladite patte d'entrejambe (11).

## Patentansprüche

1. Kinderwiege (1), die eine Schale (2) mit einem Boden umfasst, auf dem ein Kind ruhen kann, wobei sich vom Boden aus in etwa senkrecht Seitenwände (4) erstrecken und wobei der Boden eine Rückhaltevorrichtung (9) für das Kind aufweist; die besagte Wiege (1) kann eine sogenannte Schlafkonfiguration, bei der das Kind in der Wiege (1) ausgestreckt ohne Anwendung der Rückhaltevorrichtung (9) liegt und eine sogenannte Transportkonfiguration einnehmen, wobei die Rückhaltevorrichtung (9) verwendet wird, um das Kind liegend in der Wiege (1) zu halten,
**dadurch gekennzeichnet, dass** die besagte Wiege (1) auf mindestens einer Innenseite ihrer Seitenwände (4) mindestens ein Mittel (13, 13', 14, 18, 19) aufweist, welches die besagte Rückhaltevorrichtung (9) oder einen Teil davon in der Schlafkonfiguration für das Kind unerreichbar macht.

2. Wiege (1) nach Anspruch 1, **dadurch gekennzeichnet, dass** das mindestens eine Mittel, welches die besagte Rückhaltevorrichtung (9) oder einen Teil davon in der Schlafkonfiguration für das besagte Kind unerreichbar macht, eine Schlaufe (13, 13') ist.

3. Wiege (1) nach einem der vorhergehenden Ansprüche, **dadurch gekennzeichnet, dass** das mindestens eine Mittel, welches die besagte Rückhaltevorrichtung (9) oder einen Teil davon in der Schlafkonfiguration für das besagte Kind unerreichbar macht eine Umschlagklappe (14) umfasst, von der mindestens ein Teil (16) eine Fläche aufweist, die so mit der Wiege (1) verbunden werden kann, dass sie abnehmbar ist, wobei die Rückhaltevorrichtung (9) oder ein Teil davon in diese Umschlagklappe (14) eingelegt wird.

4. Wiege (1) nach einem der vorhergehenden Ansprüche, **dadurch gekennzeichnet, dass** die besagte Wiege (1) eine Anfertigung (17) aufweist und, wobei das mindestens eine Mittel, welches die besagte Rückhaltevorrichtung (9) oder einen Teil davon in der Schlafkonfiguration für das besagte Kind unerreichbar macht, ein in der besagten Anfertigung (17) ausgebildeter Schlitz (18, 19) ist.

5. Wiege (1) nach Anspruch 4, **dadurch gekennzeichnet, dass** der besagte Schlitz (19) eine geradlinige Form (20) aufweist, die an einem Ende eine breitere Öffnung (22) aufweist.

6. Wiege (1) nach einem der vorhergehenden Ansprüche, **dadurch gekennzeichnet, dass** die besagte Rückhaltevorrichtung (9) ein Sicherheitsgeschirr ist, welches zwei Gurte (10) und eine zwischen den Beinen liegenden Lasche (11) aufweist, die auf der Höhe einer Schlaufe (12) zusammengefügt werden, wobei das mindestens eine Mittel, welches die besagte Rückhaltevorrichtung (9) oder einen Teil davon in der Schlafkonfiguration für das besagte Kind unerreichbar macht, die besagten Gurte (10) oder die besagten Gurte (10) und die besagte zwischen den Beinen liegende Lasche (11) aufnimmt.

## Claims

1. Baby's carry cot (1) comprising a body (2), with a base on which a baby can rest, and from which lateral walls (4) extend substantially vertically, and a device for the retention of the baby (9), the carry cot (1) being able to have a so-called sleep configuration, with the baby being recumbent in the carry cot (1) without the device for the retention of the baby(9)being used, and a so-called transport configuration, with the retention device (9) being used to keep the baby recumbent in the carry cot (1), **characterised in that**, on at least one of its lateral walls (4) on the inner side of the carry cot (1), the carry cot (1) presents at least one means (13, 13', 14, 18, 19) for making the retention device (9), or part of it, inaccessible to said baby in the sleep configuration.

2. Carry cot (1) according to claim 1, **characterised in that** the at least one means for making the said retention device (9), or part of it, inaccessible to the baby in the sleep configuration, is a loop (13, 13').

3. Carry cot (1) according to any one of the preceding claims, **characterised in that** the at least one means for making the said retention device (9), or part of it, inaccessible to the baby in the sleep configuration, comprises a flap (14), at least part (16) of which has a surface which is designed to be connected in a removable manner to the carry cot (1), the retention device (9), or part of it, being designed to be placed in this flap (14).

4. Carry cot (1) according to any one of the preceding claims, **characterised in that** the carry cot (1) has a confection (17), and the at least one means for making the retention device (9), or part of it, inaccessible to the baby in the sleep configuration, is a slit (18, 19) formed in said confection (17).

5. Carry cot (1) according to claim 4, **characterised in that** the slot (19) has a rectilinear shape (20) which ends at one end in a wider opening (22).

6. Carry cot (1) according to any one of the preceding claims, **characterised in that** the retention device (9) is a harness with two straps (10) and a crotch support (11) which are designed to be connected at a buckle (12), the at least one means for making the retention device (9), or part of it, inaccessible to the said baby in the sleep configuration being designed to receive the straps (10) or the straps (10) and the crotch support (11).
